# EUROPÄISCHE PATENTSCHRIFT

(11) **EP 3 253 721 B1**
(45) Veröffentlichungstag und Bekanntmachung des Hinweises auf die Patenterteilung: **21.11.2018**
(21) Anmeldenummer: 16703929.6
(22) Anmeldetag: 22.01.2016
(51) Int. Cl.: C03C 11/00, C03B 19/08, C03C 1/02, C03C 3/087

(54) **BLÄHGLASGRANULAT UND VERFAHREN ZU DESSEN HERSTELLUNG**
EXPANDED GLASS GRANULAR MATERIAL AND METHOD FOR PRODUCING THE SAME
GRANULAT DE VERRE MOUSSE ET SON PROCÉDÉ DE FABRICATION

(30) Priorität: 03.02.2015 DE 102015201842
(43) Veröffentlichungstag der Anmeldung: 13.12.2017
(73) Patentinhaber: DENNERT PORAVER GmbH, 92353 Postbauer-Heng (DE)
(72) Erfinder: WEINBERGER, Karl, 94253 Bischofsmais (DE)
(74) Vertreter: FDST Patentanwälte
(86) Internationale Anmeldenummer: PCT/EP2016/051381
(87) Internationale Veröffentlichungsnummer: WO 2016/124428

(56) Entgegenhaltungen:
- EP-A1- 2 647 605
- EP-A1- 2 708 517
- EP-B1- 1 183 215
- DE-A1-102010 039 232
- DE-U1- 20 022 776
- US-A- 3 744 984
- US-A1- 2013 029 885

## Beschreibung

Die Erfindung bezieht sich auf Blähglasgranulat. Die Erfindung bezieht sich weiterhin auf ein Verfahren zur Herstellung von Blähglasgranulat.

Blähglasgranulate werden u.a. als Dämmstoffe, als Leichtzuschlagstoffe in Baumaterialien wie z.B. Beton oder als Füller in flüssigen oder pastösen Systemen eingesetzt.

Blähglasgranulate und Verfahren zu deren Herstellung sind beispielsweise bekannt aus US 3,870,496, WO 2005/087676 A1, DE 43 44 994 A1, US 4,086,098 A, EP 0 661 240 B1, DE 100 33 999 A1, DE 197 34 791 B4, DE 103 34 997 A1, EP 0 010 069 B2, DE 198 37 327 A1, WO 98/19976 A1, DE 101 46 806 B4 und DE 10 2010 000 049 B4.

Aus EP 1 183 215 B1 ist ein Verfahren zur Herstellung eines Blähglasgranulats bekannt. Nach dem dortigen Beispiel 7 werden für die Blähglasherstellung Glasmehl, Natronwasserglas ("Wasserglas 37/40 (Henkel KGaA)"), Wasser und Natronlauge als Ausgangsstoffe herangezogen. Alternativ hierzu offenbart D1 im Zusammenhang mit dem dortigen Beispiel 4 die Verwendung von Glasmehl, Natronlauge, Borax, Metakaolin und Wasser als Ausgangsstoffe für die Blähglasherstellung.

Ferner ist aus US 3,744,984 A ein Verfahren zur Herstellung von geschäumten porzellanartigen Formkörpern bekannt. Als Ausgangsmaterialien sind dabei u.a. Silikatglasmehl, Natron- oder Kaliwasserglas, ein inorganisches Alkalisalz als Blähmittel sowie Kaolin oder kalziniertes Kaolin genannt.

Demgegenüber liegt der Erfindung die Aufgabe zugrunde, ein Blähglasgranulat zu schaffen, das eine besonders geringe Wasseraufnahme aufweist. Insbesondere die Langzeitwasseraufnahme des Blähglasgranulats über einen Zeitraum von mehreren Tagen oder Wochen soll hierbei verbessert werden.

Bezüglich eines Verfahrens zur Herstellung von Blähglasgranulat wird die Aufgabe erfindungsgemäß gelöst die Merkmale des Anspruchs 1. Bezüglich eines Blähglasgranulats wird die Aufgabe erfindungsgemäß gelöst durch die Merkmale des Anspruchs 12. Vorteilhafte und teils für sich gesehen erfinderische Ausgestaltungsformen und Weiterbildungen der Erfindung sind in den Unteransprüchen und der nachfolgenden Beschreibung dargelegt.

Im Zuge des erfindungsgemäßen Verfahrens zur Herstellung eines Blähglasgranulats werden vorgegebene Ausgangsstoffe zu einem homogenen Schlicker (auch als "Ansatz" bezeichnet) vermischt. Die Ausgangsstoffe umfassen hierbei Glasmehl, Wasserglas (wobei der Wasserglasanteil zumindest zum Teil durch ein Kaliwasserglas gebildet wird) sowie mindestens ein Blähmittel. Das Wasserglas wird dabei vorzugsweise in wässriger Lösung eingebracht. Zur Erreichung einer für die Weiterverarbeitung des Schlickers gewünschten Zielfeuchte wird den vorstehend genannten Ausgangsstoffen ferner bedarfsweise Wasser zugesetzt.

Der aus den Ausgangsstoffen hergestellte Schlicker wird zu Rohgranulat-Partikeln (Grünkörnern) granuliert. Der Granulierprozess wird dabei vorzugsweise - je nach der gewünschten Korngröße der Grünkörner - mittels eines Granuliertellers oder eines Sprühturms vorgenommen. Alternativ können zur Granulierung der Grünkörper im Rahmen der Erfindung auch ein Durchlauf-Granuliermischer, ein Pflugscharmischer, ein Wirbelschicht-Granulierer oder ein Kompaktierer eingesetzt werden.

Die so hergestellten Grünkörner werden - optional nach Trocknung und/oder Siebung - bei einer Brenntemperatur zwischen 780°C und 950°C zu Blähglasgranulat-Partikeln aufgeschäumt. Dieser Schäumprozess wird hierbei durch eine - durch Verdampfung oder chemische Umsetzung des Blähmittels verursachte - Gasbildung getrieben. Als Brennofen zur Aufheizung der Grünkörner auf die Brenntemperatur wird vorzugsweise ein Drehrohrofen eingesetzt. Die resultierenden Blähglaspartikel weisen eine multizelluläre, zumindest weitgehend geschlossenporige Struktur und eine glatte, geschlossene Oberfläche auf.

Um zu verhindern, dass die Grünkörner und die sich daraus entwickelnden Blähglasgranulat-Partikel aneinander sowie an der Ofenwand verkleben, wird das Grünkorngranulat mit einem Trennmittel vermischt. Die Zugabe des Trennmittels zu dem Grünkorn-Granulat erfolgt vorzugsweise erst bei der Eingabe des Grünkorn-Granulats in den Brennofen.

Als Trennmittel wird in an sich üblicher Weise (Neu-)Kaolin eingesetzt. Wie bereits in DE 10 2004 056 781 A1 beschrieben ist, wird das als Hauptbestandteil in Kaolin enthaltene Kaolinit (Al₄[(OH)₈Si₄O₁₀]) durch die thermische Beaufschlagung in dem Brennofen bei Temperaturen von ca. 700°C nach der Formel

Al₄[(OH)₈Si₄O₁₀] → 2 (Al₂O₃ x 2SiO₂) + 4 H₂O

zu Metakaolin (Al₂O₃ x 2SiO₂) kalziniert, wobei das frei werdende Wasser verdampft.

Gemäß DE 10 2004 056 781 A1 wird das als Nebenprodukt der Blähglasherstellung anfallende Metakaolin nach dem Brennprozess von dem Blähglasgranulat separiert und als Trennmittel in den Brennprozess zurückgeführt oder als eigenständiges Produkt einer anderweitigen Verwendung, z.B. als Bestandteil einer Fließenklebermischung zugeführt.

Abweichend hiervon wird Metakaolin erfindungsgemäß bereits als zusätzlicher Ausgangsstoff für die Herstellung des Schlickers verwendet. Erfindungsgemäß wird den zu dem Schlicker vermischten Ausgangsstoffen dabei Metakaolin mit einem Feststoffanteil zwischen 0,5 Masse-% und 7 Masse-%, vorzugsweise zwischen 1,0 Masse-% und 5 Masse-% zugemischt.

Der Feststoffanteil eines bestimmten Ausgangsstoffes (hier Metakaolin) ist hier und im Folgenden stets gegeben durch die zur Herstellung des Schlickers aufgewendete Masse dieses Ausgangsstoffes, bezogen auf die Gesamtmasse der in den Ausgangsstoffen enthaltenden Feststoffe. Die Gesamtmasse der in den Ausgangsstoffen enthaltenden Feststoffe ist wiederum gegeben durch die Gesamtmasse des Schlickers abzüglich der Gesamtmasse des in dem Schlicker in flüssiger Form enthaltenen Wassers.

Überraschenderweise hat sich gezeigt, dass die Zumischung von Metakaolin zu dem Ansatz eine wesentliche Verbesserung der chemischen Beständigkeit, und damit eine erhebliche Reduzierung der mittel- und langfristigen Wasseraufnahme des Blähglasgranulats bewirkt. Diese Wirkung beruht erkanntermaßen insbesondere darauf, dass Metakaolin bereits bei der Herstellung des Schlickers, also in dem wässrigen Ansatz der Ausgangsstoffe, angelöst wird. Hierbei wird Aluminium herausgelöst, das bei dem späteren Verschäumungsprozess in die Wasserglas-Matrix eindiffundiert und dort unter Bildung von stabilen Alumosilikaten eingebaut wird.

Vorzugsweise sind die Feststoffanteile der Ausgangsstoffe Glasmehl, Wasserglas und Blähmittel wie folgt gewählt:
- Glasmehl: 83 Masse-% bis 90 Masse-%, vorzugsweise 85,3 Masse-% bis 88,9 Masse-%,
- Wasserglas: 7,5 Masse-% bis 11 Masse-%, vorzugsweise 8,1 Masse-% bis 10,5 Masse-%, und
- Blähmittel: 0,8 Masse-% bis 2,5 Masse-%, vorzugsweise 1,0 Masse-% bis 2,3 Masse-%.

Es hat sich gezeigt, dass eine weitere Verbesserung der chemischen Beständigkeit und entsprechend eine weitere Reduzierung der Wasseraufnahme des Blähglasgranulats erreicht werden kann, wenn als Wasserglas anstelle des üblicherweise verwendeten Natronwasserglas Kaliwasserglas zur Herstellung des Schlickers verwendet wird. Der Wasserglasanteil der Ausgangsstoffe kann hierbei im Rahmen der Erfindung ausschließlich in Form von Kaliwasserglas zugegeben werden - in diesem Fall wird den Ausgangsstoffen also kein Natronwasserglas zugegeben. Um die mit dem Einsatz von Kaliwasserglas verbundene Erhöhung der Brenntemperatur gering zu halten, werden allerdings vorzugsweise Kaliwasserglas und Natronwasserglas in Kombination eingesetzt. Entsprechend enthalten die zu dem Schlicker vermischten Ausgangsstoffe in bevorzugter Ausgestaltung der Erfindung neben einem - vorzugsweise überwiegenden - Anteil an Kaliwasserglas auch Natronwasserglas, insbesondere mit folgenden Feststoffanteilen:
- Kaliwasserglas: 6,5 Masse-% bis 9 Masse-%, vorzugsweise 6,8 Masse-% bis 8,4 Masse-%, und
- Natronwasserglas: 1 Masse-% bis 2,5 Masse-%, vorzugsweise 1,3 Masse-% bis 2,1 Masse-%.

In zweckmäßiger Ausführungsform der Erfindung wird als Blähmittel ausschließlich Natriumnitrat (Natronsalpeter, NaNO₃) eingesetzt. Alternativ hierzu sind in den zu dem Schlicker vermischten Ausgangsstoffen als Blähmittel Natriumnitrat und Glucose (Dextrose, C₆H₁₂O₆) in Kombination enthalten, vorzugsweise in folgenden Feststoffanteilen:
- Natriumnitrat: 0,75 Masse-% bis 2,5 Masse-%, vorzugsweise 1,0 Masse-% bis 2,2 Masse-%, und
- Glucose: 0,05 Masse-% bis 0,5 Masse-%, vorzugsweise 0,06 Masse-% bis 0,16 Masse-%.

Optional wird den zu dem Schlicker vermischten Ausgangsstoffen zusätzlich Aluminiumhydroxid (Al(OH)₃) zugemischt, vorzugsweise mit einem Feststoffanteil zwischen 0,25 Masse-% und 3 Masse-%.

Im Rahmen der Erfindung können die Ausgangsstoffe wahlweise trockendispergiert oder nassdispergiert werden. In einer vorteilhaften Ausführung des Verfahrens werden die Ausgangsstoffe zunächst zu einem Rohansatz vermischt, der nach oder unter Zugabe von Wasser über mehrere Stunden zu dem Schlicker nassgemahlen wird.

Das erfindungsgemäße Blähglasgranulat zeichnet sich durch eine besonders geringe Langzeitwasseraufnahme aus, die weniger als 25 Volumen-%, vorzugsweise sogar weniger als 15 Volumen-% beträgt, wenn das Blähglasgranulat für einen Zeitraum von 21 Tagen Wasser ausgesetzt ist. Die Messung der Wasseraufnahme erfolgt hierbei insbesondere nach DIN EN 1097-6. Das erfindungsgemäße Blähglasgranulat ist dabei nach dem vorstehend beschriebenen, erfindungsgemäßen Verfahren hergestellt.

Insbesondere für Körnungen (Korndurchmesser des Blähglasgranulats in Millimetern) von 0,25-0,5 und 0,5-1,0 werden dabei unter Anwendung des erfindungsgemäßen Verfahrens noch wesentlich geringere Werte der Langzeitwasseraufnahme erzielt, die insbesondere in der Größenordnung von 7 Volumen-% bis 10 Volumen-% (nach 21 Tagen Wassereinwirkung) liegen.

Das erfindungsgemäße Blähglasgranulat hat hierbei vorzugsweise eine Kornrohdichte von weniger als 900 kg/m³ (scheinbare Rohdichte gemäß DIN EN 1097-6, DIN EN 1097-7).

Nachfolgend werden vier Ausführungsbeispiele des erfindungsgemäßen Blähglasgranulats sowie des jeweils zugehörigen Herstellungsverfahrens beschrieben, die im Folgenden als Beispiele B1 bis B4 bezeichnet sind.

Für die einzelnen Beispiele B1 bis B4 wurden zunächst Ausgangsstoffe mit folgender Zusammensetzung bereitgestellt:

**Tab. 1: Feststoffanteile der Ausgangsstoffe für die Beispiele B1 bis B4**

| | GM | AHO | NS | GL | KWG | NWG | MK |
|---|---|---|---|---|---|---|---|
| B1 | 88,03 | --- | 2,05 | 0,16 | 6,21 | 2,02 | 1,54 |
| B2 | 88,93 | --- | 1,34 | 0,06 | 6,27 | 1,83 | 1,57 |
| B3 | 83,75 | 1,92 | 1,68 | 0,10 | 6,98 | 0,48 | 5,10 |
| B4 | 85,32 | --- | 2,00 | 0,06 | 8,18 | --- | 4,44 |

In Tab.1 stehen die Abkürzungen
- GM für Glasmehl,
- AHO für Aluminiumhydroxid (Al(OH)₃),
- NS für Natriumnitrat,
- GL für Glucose,
- KWG für Kaliwasserglas,
- NWG für Natronwasserglas, und
- MK für Metakaolin.

Die in Tab. 1 enthaltenen Werte beziehen sich jeweils auf den in Masse-% angegebenen Feststoffanteil des jeweiligen Ausgangsstoffs, bezogen auf die unter Abzug des Wasseranteils berechnete Gesamt-Feststoffmasse der Ausgangsstoffe.

Das Glasmehl wurde jeweils in einem dem Verfahren vorausgehende Schritt aus Recyclingglas (konkret einer Mischung aus Behälterglas und Flachglas) durch Mahlen in einer Kugelmühle auf eine Feinheit von d₉₇ < 40 µm hergestellt.

Die in Tab. 1 aufgeführten Ausgangsstoffe wurden jeweils in einem Mischer für 30 Minuten zu einem homogenen Schlicker verrührt. Das (Kali- bzw. Natron-)Wasserglas wurde hierbei jeweils in wässriger Lösung beigegeben. Durch Zugabe von Wasser wurde jeweils eine in Tab. 2 aufgeführte Zielfeuchte des Schlickers eingestellt.

Der resultierende Schlicker wurde anschließend auf einem Granulierteller granuliert. Das so erhaltene Grünkorngranulat wurde jeweils bei einer Trockentemperatur von 200°C für 10 min getrocknet und bedarfsweise gesiebt. Das getrocknete Grünkorngranulat wurde unter Zugabe von Kaolin als Trennmittel in einen Drehrohrofen eingebracht. In dem Drehrohrofen wurde das Grünkorngranulat jeweils für ca. 5 bis 10 min bei einer aus Tab. 2 ersichtlichen Brenntemperatur aufgeschäumt.

**Tab.2: Zielfeuchte des Schlickers, Körnung des Blähglasgranulats und Brenntemperatur für die Beispiele B1 bis B4**

| | Zielfeuchte | Körnung | Brenntemperatur |
|---|---|---|---|
| B1 | 17,3 | 0,5-1,0 | 825 |
| B2 | 16,85 | 0,5-1,0 | 810 |
| B3 | 15,89 | 0,5-1,0 | 818 |
| B4 | 40 | 0,25-0,5 | 910 |

In Tab. 2 ist die Zielfeuchte hierbei in Masse-% des in flüssiger Form in dem Schlicker enthaltenen Wassers, bezogen auf die Gesamtmasse des Schlickers angegeben. Die in Tab. 2 angegebene Körnung gibt den Partikeldurchmesser des (nach dem Aufschäumprozess erhaltenen) Blähglasgranulats in Millimetern an. Die Brenntemperatur ist in °C angegeben.

Das aus dem Aufschäumungsprozess resultierende Blähglasgranulat wurde anschließend abgekühlt und anschließend gesiebt, so dass Blähglasgranulat mit einer in Tab. 2 angegebenen Körnung erhalten wurde.

Das gesiebte Blähglasgranulat wurde hinsichtlich Festigkeit, Schüttgewicht, Kornrohdichte, Wasseraufnahme und chemischer Zusammensetzung analysiert. Hieraus ergaben sich für die Beispiele B1 bis B4 die aus Tab. 3 bis 5 ersichtlichen Eigenschaften:

**Tab. 3: Festigkeit, Schüttgewicht und Kornrohdichte des Blähglasgranulats für die Beispiele B1 bis B4**

| | Festigkeit | Schüttgewicht | Kornrohdichte |
|---|---|---|---|
| B1 | 1,76 | 311,2 | 592 |
| B2 | 3,42 | 322,2 | 604 |
| B3 | 2,50 | 377 | 686 |
| B4 | 3,43 | 450 | 816 |

In Tab. 3 sind
- die Festigkeit nach DIN EN 13055-1 (mittlere Kornfestigkeit) in N/mm²,
- das Schüttgewicht in kg/m³, und
- die Kornrohdichte nach DIN EN 1097-6, DIN EN 1097-7 (Scheinbare Rohdichte) in kg/m³
angegeben.

Das in Tab. 3 angegebene Schüttgewicht wird bestimmt, indem ein - in randvoll gefülltem Zustand - 1000 ml fassender Messzylinder mittels eines Pulvertrichters in einem Zug mit der zu untersuchenden Probe befüllt wird, so dass sich oberhalb des Abschlusses des Messzylinders ein Schüttkegel ausbildet. Der Schüttkegel wird mit Hilfe eines über die Öffnung des Messzylinders geführten Lineals abgestreift. Das Gewicht des gefüllten Messzylinders abzüglich seines Leergewichts ergibt das Schüttgewicht der zu untersuchenden Probe.

**Tab. 4: Langzeitwasseraufnahme des Blähglasgranulats für die Beispiele B1 bis B4**

| | Langzeitwasseraufnahme | | |
|---|---|---|---|
| | nach 7 Tagen | nach 14 Tagen | nach 21 Tagen |
| B1 | 3,1 | 5,2 | 7,0 |
| B2 | 4,5 | 7,1 | 10,0 |
| B3 | 5,2 | 8,0 | 10,1 |
| B4 | 5,3 | 6,7 | 7,8 |

**Tab. 5: Chemische Zusammensetzung des Blähglasgranulats für die Beispiele B1 bis B4**

| | SiO₂ | Al₂O₃ | Na₂O | K₂O | MgO | CaO | Fe₂O₃ | Rest |
|---|---|---|---|---|---|---|---|---|
| B1 | 69,7 | 2,1 | 12,7 | 2,5 | 1,8 | 9,0 | 0,2 | 2,0 |
| B2 | 70,6 | 2,4 | 12,0 | 2,4 | 1,8 | 9,1 | 0,4 | 1,3 |
| B3 | 68,9 | 3,4 | 12,2 | 2,2 | 3,4 | 7,5 | 0,2 | 2,1 |
| B4 | 69,6 | 2,8 | 11,9 | 3,0 | 2,4 | 8,3 | 0,2 | 1,8 |

In Tab. 5 stehen die Angaben
- SiO₂ für Siliziumdioxid,
- Al₂O₃ für Aluminiumoxid,
- Na₂O für Natriumoxid,
- K₂O für Kaliumoxid,
- MgO für Magnesiumoxid (Magnesia),
- CaO für Calziumoxid,
- Fe₂O₃ für Eisen(III)-oxid, und
- Rest für Anteile an anderen Oxiden.

Die Zahlenangaben in Tab. 5 geben die Massenanteile der jeweiligen Verbindung oder Verbindungsgruppe in Masse-%, bezogen auf die Gesamt-(Trocken-)Masse des Blähglasgranulats an.

Die Erfindung wird an den vorstehend beschriebenen Ausführungsbeispielen besonders deutlich, ist auf diese Beispiele gleichwohl aber nicht beschränkt. Vielmehr können zahlreiche weitere Ausführungsformen der Erfindung aus den Ansprüchen und der vorstehenden Beschreibung abgeleitet werden.

## Patentansprüche

1. Verfahren zur Herstellung eines Blähglasgranulats mit folgenden Schritten:
- Vermischen von Ausgangsstoffen, umfassend Glasmehl, Wasserglas sowie mindestens ein Blähmittel zu einem homogenen Schlicker,
- Granulieren des Schlickers zu Rohgranulat-Partikeln, und
- Verschäumen der Rohgranulat-Partikel zu Blähglasgranulat-Partikeln bei einer Brenntemperatur zwischen 780°C und 950°C,
**dadurch gekennzeichnet,**
**dass** die zu dem Schlicker vermischten Ausgangsstoffe ein Kaliwasserglas sowie zusätzlich Metakaolin umfassen, wobei der Feststoffanteil an Metakaolin, bezogen auf die Gesamtmasse der in den Ausgangsstoffen enthaltenden Feststoffe, zwischen 0,5 Masse-% und 7 Masse-% beträgt.

2. Verfahren nach Anspruch 1
wobei die zu dem Schlicker vermischten Ausgangsstoffe, bezogen auf die Gesamtmasse der in den Ausgangsstoffen enthaltenden Feststoffe, einen Feststoffanteil an Metakaolin zwischen zwischen 1,0 Masse-% und 5 Masse-%, enthalten.

3. Verfahren nach Anspruch 1 oder 2,
wobei die zu dem Schlicker vermischten Ausgangsstoffe, bezogen auf die Gesamtmasse der in den Ausgangsstoffen enthaltenden Feststoffe, Feststoffanteile
- an Glasmehl zwischen 83 Masse-% und 90 Masse-%, vorzugsweise zwischen 85,3 Masse-% und 88,9 Masse-%,
- an Wasserglas zwischen 7,5 Masse-% und 11 Masse-%, vorzugsweise zwischen 8,1 Masse-% und 10,5 Masse-%, und
- an Blähmittel zwischen 0,8 Masse-% und 2,5 Masse-%, vorzugsweise zwischen 1,0 Masse-% und 2,3 Masse-%
enthalten.

4. Verfahren nach einem der Ansprüche 1 bis 3,
wobei die zu dem Schlicker vermischten Ausgangsstoffe Kaliwasserglas und Natronwasserglas enthalten.

5. Verfahren nach Anspruch 4,
wobei die zu dem Schlicker vermischten Ausgangsstoffe, bezogen auf die Gesamtmasse der in den Ausgangsstoffen enthaltenden Feststoffe, Feststoffanteile
- an Kaliwasserglas zwischen 6,5 Masse-% und 9 Masse-%, vorzugsweise zwischen 6,8 Masse-% und 8,4 Masse-%, und
- an Natronwasserglas zwischen 1 Masse-% und 2,5 Masse-%, vorzugsweise zwischen 1,3 Masse-% und 2,1 Masse-%
enthalten.

6. Verfahren nach einem der Ansprüche 1 bis 5,
wobei die zu dem Schlicker vermischten Ausgangsstoffe als Blähmittel Natriumnitrat enthalten.

7. Verfahren nach Anspruch 6,
wobei die zu dem Schlicker vermischten Ausgangsstoffe als Blähmittel Natriumnitrat und Glucose enthalten.

8. Verfahren nach Anspruch 7,
wobei die zu dem Schlicker vermischten Ausgangsstoffe, bezogen auf die Gesamtmasse der in den Ausgangsstoffen enthaltenden Feststoffe, Feststoffanteile
- an Natriumnitrat zwischen 0,75 Masse-% und 2,5 Masse-%, vorzugsweise zwischen 1,0 Masse-% und 2,2 Masse-%, und
- an Glucose zwischen 0,05 Masse-% und 0,5 Masse-%, vorzugsweise zwischen 0,06 Masse-% und 0,16 Masse-%
enthalten.

9. Verfahren nach einem der Ansprüche 1 bis 8,
wobei die zu dem Schlicker vermischten Ausgangsstoffe Aluminiumhydroxid enthalten.

10. Verfahren nach Anspruch 9,
wobei die zu dem Schlicker vermischten Ausgangsstoffe, bezogen auf die Gesamtmasse der in den Ausgangsstoffen enthaltenden Feststoffe, einen Feststoffanteil an Aluminiumhydroxid zwischen 0,25 Masse-% und 3 Masse-% enthalten.

11. Blähglasgranulat, hergestellt nach einem der Ansprüche 1 bis 10, **gekennzeichnet durch** eine Langzeitwasseraufnahme von weniger als 15 Volumen-%, wenn es für einen Zeitraum von 21 Tagen Wasser ausgesetzt ist.

12. Blähglasgranulat nach Anspruch 11,
**gekennzeichnet durch** eine Kornrohdichte von weniger als 900 kg/m³.

## Claims

1. Method for producing an expanded glass granulate having the following steps:
- mixing source materials, comprising glass powder, water glass and at least one expanding agent with a homogenous slip,
- granulating the slip to form crude granulate particles, and
- foaming the crude granulate particles to form expanded glass granulate particles at a firing temperature between 780°C and 950°C,
**characterised in that**
the source materials mixed with the slip comprise a potassium water glass and, additionally, metakaolin, wherein the solids content of metakaolin with respect to the total mass of the solids contained in the source materials is between 0.5 % by mass and 7 % by mass.

2. Method according to claim 1,
wherein the source materials mixed with the slip, with respect to the total mass of the solids contained in the source materials, contain a solids content of metakaolin between 1.0 % by mass and 5 % by mass

3. Method according to claim 1 or 2,
wherein the source materials mixed with the slip, with respect to the total mass of the solids contained in the source materials, contain solids contents:
- of glass powder between 83 % by mass and 90 % by mass, preferably between 85.3 % by mass and 88.9 % by mass,
- of water glass between 7.5 % by mass and 11 % by mass, preferably between 8.1 % by mass and 10.5 % by mass, and
- of expanding agent between 0.8 % by mass and 2.5 % by mass, preferably between 1.0 % by mass and 2.3 % by mass.

4. Method according to one of claims 1 to 3,
wherein the source materials mixed with the slip contain potassium water glass and sodium water glass.

5. Method according to claim 4,
wherein the source materials mixed with the slip, with respect to the total mass of the solids contained in the source materials, contain solids contents:
- of potassium water glass between 6.5 % by mass and 9 % by mass, preferably between 6.8 % by mass and 8.4 % by mass, and
- of sodium water glass between 1 % by mass and 2.5 % by mass, preferably between 1.3 % by mass and 2.1 % by mass.

6. Method according to one of claims 1 to 5,
wherein the source materials mixed with the slip contain sodium nitrate as an expanding agent.

7. Method according to claim 6,
wherein the source materials mixed with the slip contain sodium nitrate and glucose as an expanding agent.

8. Method according to claim 7,
wherein the source materials mixed with the slip, with respect to the total mass of the solids contained in the source materials, contain solids contents:
- of sodium nitrate between 0.75 % by mass and 2.5 % by mass, preferably between 1.0 % by mass and 2.2 % by mass, and
- of glucose between 0.05 % by mass and 0.5 % by mass, preferably between 0.06 % by mass and 0.16 % by mass.

9. Method according to one of claims 1 to 8,
wherein the source materials mixed with the slip contain aluminium hydroxide.

10. Method according to claim 9,
wherein the source materials mixed with the slip, with respect to the total mass of the solids contained in the source materials, contain a solids content of aluminium hydroxide between 0.25 % by mass and 3 % by mass.

11. Expanded glass granulate, produced according to one of claims 1 to 10, **characterised by** a long-term water consumption of less than 15 % by volume when it is exposed to water for a period of 21 days.

12. Expanded glass granulate according to claim 11, **characterised by** a grain bulk density of less than 900 kg/m³.

## Revendications

1. Procédé de production de granulat de verre cellulaire comprenant les étapes suivantes consistant à :
- Mélanger des matières de départ comprenant du verre pulvérisé, du verre soluble et au moins un agent d'expansion pour former une suspension homogène,
- Granuler la suspension en particules de granulat brut et
- Mousser les particules de granulat brut en particules de granulat de verre cellulaire à une température de cuisson comprise entre 780 °C et 950 °C,
**caractérisé**
**en ce que** les matières de départ mélangées pour former la suspension comprennent un verre soluble au potassium et en outre du métakaolin, la teneur en matières solides du métakaolin, rapportée à la masse totale des matières solides contenues dans les matières de départ, étant comprise entre 0,5 % et 7 % en masse.

2. Procédé selon la revendication 1,
dans lequel les matières de départ mélangées pour former la suspension contiennent une teneur en matières solides de métakaolin, rapportée à la masse totale des matières solides contenues dans les matières de départ, comprise entre 1,0 % et 5 % en masse.

3. Procédé selon la revendication 1 ou 2,
dans lequel les matières de départ mélangées pour former la suspension contiennent des teneurs en matières solides, rapportées à la masse totale des matières solides contenues dans les matières de départ, comprises
- pour de verre pulvérisé entre 83 % et 90 % en masse, de préférence entre 85,3 % et 88,9 % en masse,
- pour le verre soluble entre 7,5 % et 11 % en masse, de préférence entre 8,1 % et 10,5 % en masse, et
- pour l'agent d'expansion entre 0,8 % et 2,5 % en masse, de préférence entre 1,0 % et 2,3 % en masse.

4. Procédé selon l'une des revendications 1 à 3,
dans lequel les matières de départ mélangées pour former la suspension comprennent du verre soluble au potassium et du verre soluble au sodium.

5. Procédé selon la revendication 4,
dans lequel les matières de départ mélangées pour former la suspension contiennent des teneurs en matières solides, rapportées à la masse totale des matières solides contenues dans les matières de départ, comprises
- pour le verre soluble au potassium entre 6,5 % et 9 % en masse, de préférence entre 6,8 % et 8,4 % en masse, et
- pour le verre soluble au sodium entre 1 % et 2,5 % en masse, de préférence entre 1,3 % et 2,1 % en masse.

6. Procédé selon l'une des revendications 1 à 5,
dans lequel les matières de départ mélangées pour former la suspension contiennent comme agent d'expansion du nitrate de sodium.

7. Procédé selon la revendication 6,
dans lequel les matières de départ mélangées pour former la suspension contiennent comme agent d'expansion du nitrate de sodium et du glucose.

8. Procédé selon la revendication 7,
dans lequel les matières de départ mélangées pour former la suspension contiennent des teneurs en matières solides, rapportées à la masse totale des matières solides contenues dans les matières de départ, comprises
- pour le nitrate de sodium entre 0,75 % et 2,5 % en masse, de préférence entre 1,0 % et 2,2 % en masse, et
- pour le glucose entre 0,05 % et 0,5 % en masse, de préférence entre 0,06 % et 0,16 % en masse.

9. Procédé selon l'une des revendications 1 à 8,
dans lequel les matières de départ mélangées pour former la suspension contiennent de l'hydroxyde d'aluminium.

10. Procédé selon la revendication 9,
dans lequel les matières de départ mélangées pour former la suspension contiennent une teneur en matières solides de l'hydroxyde d'aluminium, rapportée à la masse totale des matières solides contenues dans les matières de départ, comprise entre 0,25 % et 3 % en masse.

11. Granulat de verre cellulaire produit selon l'une des revendications 1 à 10, **caractérisés par** une absorption d'eau à long terme inférieure à 15 % en volume lorsqu'il est exposé à l'eau pendant une période de 21 jours.

12. Granulat de verre cellulaire selon la revendication 11,
**caractérisé par** une masse volumique apparente de grain inférieure à 900 kg/m³.
